(19) Europäisches Patentamt
European Patent Office
Office européen des brevets

(11) **EP 2 739 946 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
*G01F 23/284* (2006.01)       *G01F 23/296* (2006.01)
*G01F 23/28* (2006.01)        *G01S 7/41* (2006.01)

(21) Anmeldenummer: **12740162.8**

(22) Anmeldetag: **26.07.2012**

(86) Internationale Anmeldenummer:
**PCT/EP2012/064742**

(87) Internationale Veröffentlichungsnummer:
**WO 2013/017534 (07.02.2013 Gazette 2013/06)**

(54) **LINEARES VERHÄLTNIS ZWISCHEN TRACKS**

LINEAR RELATIONSHIP BETWEEN TRACKS

RELATION LINEAIRE ENTRE PISTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2011 EP 11176609**
**04.08.2011 US 201161515184 P**
**17.10.2011 EP 11185454**
**17.10.2011 US 201161547863 P**

(43) Veröffentlichungstag der Anmeldung:
**11.06.2014 Patentblatt 2014/24**

(73) Patentinhaber: **VEGA Grieshaber KG**
**77709 Wolfach (DE)**

(72) Erfinder:
• **WELLE, Roland**
**77709 Oberwolfach (DE)**
• **HOFERER, Christian**
**77654 Offenburg (DE)**
• **GRIESSBAUM, Karl**
**77796 Mühlenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 2 148 219       EP-A1- 2 309 235**
**US-A1- 2006 137 446**

**Beschreibung**

Gebiet der Erfindung

Die Erfindung betrifft das technische Gebiet der Füllstandmessung. Insbesondere betrifft die Erfindung ein Laufzeit-Füllstandmessgerät, ein Laufzeit-Füllstandmessverfahren zum Durchführen eines Tracking-Verfahrens zur Gruppierung von jeweils auf identische Reflektoren zurückzuführenden Echos von zu verschiedenen Zeiten erfassten Echokurven, einen Prozessor zum Durchführen des Tracking-Verfahrens, ein computerlesbares Medium und ein Programmelement.

Technischer Hintergrund

Laufzeit-Füllstandmessgeräte arbeiten nach dem FMCW oder Impuls-Laufzeitverfahren. Diese Messgeräte senden elektromagnetische oder akustische Wellen in Richtung einer Füllgutoberfläche aus. Diese Wellen werden dann ganz oder teilweise von verschiedenen Reflektoren reflektiert. Bei diesen Reflektoren kann es sich insbesondere um die Oberfläche des Füllmediums (z.B. Wasser, Ol, andere Fluide oder Fluidmischungen oder Schüttgut), den Boden des Behälters, in dem das Füllmedium gespeichert ist, Verunreinigungen, Trennschichten zwischen verschiedenen Füllgütern (beispielsweise die Trennschicht zwischen Wasser und Öl) oder stationäre Störstellen im Behälter, wie Vorsprünge oder andere Behältereinbauten, handeln.

Das so reflektierte Sendesignal (im Folgenden auch Empfangssignal oder Echokurve genannt) wird nun anschließend von dem Füllstandmessgerät aufgenommen und aufgezeichnet.

Die Füllstandmessgeräte arbeiten typischerweise in einem gepulsten Betrieb, senden also jeweils zu verschiedenen Zeiten ein Sendesignal in Impulsform aus und der resultierende, reflektierte Impuls des Sendesignals (Empfangssignal) wird dann, wie bereits beschrieben, von der Sensorik des Füllstandmessgeräts detektiert. Daraus leitet dann die Auswerteeinheit des Geräts die Lage oder Position der Füllmediumoberfläche ab. In anderen Worten wird also aus diesem aufgenommenen Impuls der Füllstand bestimmt.

Andere Füllstandmessgeräte arbeiten nach dem FMCW-Prinzip. Dabei werden kontinuierlich in der Frequenz modulierte Wellen in Richtung des Behälters abgestrahlt, und die reflektierten Signalanteile werden im Gerät zusammen mit dem momentan abgestrahlten Signal verarbeitet. Ergebnis dieser Verarbeitung ist ein Frequenzspektrum, das sich nach bekannten Verfahren in eine Echokurve überführen lässt.

Die so gewonnenen und ggf. bereits verarbeiteten und ausgewerteten Daten können an ein externes Gerät bereitgestellt werden. Die Bereitstellung kann in analoger Form (4...20mA-Schnittstelle) oder auch in digitaler Form (Feldbus) erfolgen.

Auch kann die Datenübertragung drahtlos erfolgen.

Die aufgenommene Echokurve, bei der es sich um den an einer oder mehreren Reflektoren reflektierten (zu einer bestimmten Zeit $t_i$ ausgesendeten) Sendeimpuls handelt, weist typischerweise ein oder mehrere Maxima und/oder Minima auf, deren elektrische Distanzen zur Empfangseinheit aus der Lage der entsprechenden Maxima oder Minima bestimmt werden können.

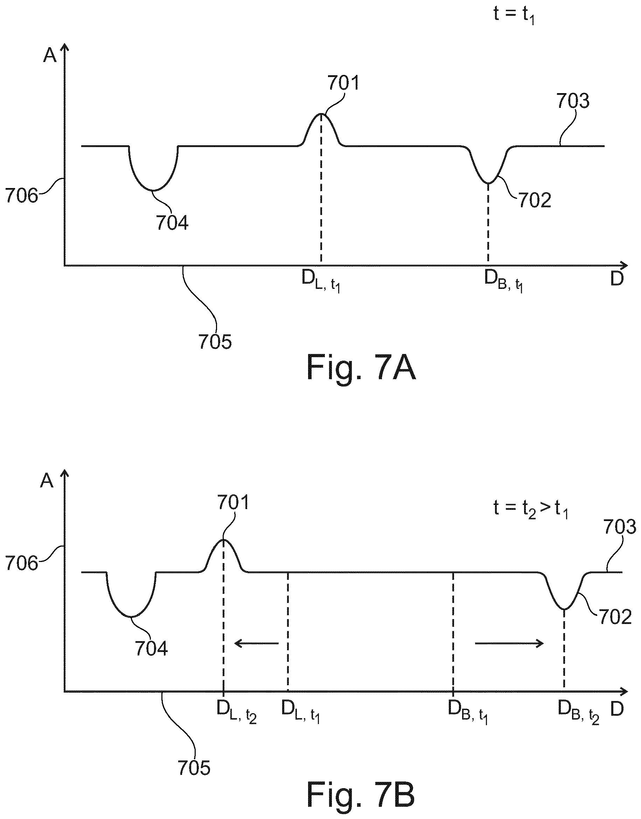

Diese elektrischen Distanzen korrespondieren mit den Laufzeiten der entsprechenden Signalanteile des Impulses. Unter Berücksichtigung der Ausbreitungsgeschwindigkeit des Signals können hieraus die physikalischen, also die tatsächlichen Distanzen, ermittelt werden. Mit anderen Worten handelt es sich bei den elektrischen Distanzen um Abszissenwerte des Empfangssignals, wenn dieses in einem Koordinatensystem aufgetragen wird (vgl. Figur 7). Dabei werden keinerlei physikalische Umwelteinflüsse berücksichtig, welche zu einer geänderten Ausbreitungsgeschwindigkeit der elektromagnetischen Wellen führen. Die elektrische Distanz kann somit als Idealbedingung des Modells angesehen werden. In Relation dazu stehen die physikalischen Distanzen. Darunter sind diejenigen Distanzwerte zu verstehen, die unmittelbar am Sensor physikalisch (z.B. mit einem Metermaß) ermittelt werden können. Das Koordinatensystem der elektrischen Distanz kann durch Verschiebung (Kompensation eines Offsets) und Streckung (Kompensation der Laufzeit) in ein Koordinatensystem bezogen auf die physikalische Distanz überführt werden. Die Begriffserklärung ist in der EP 11 167 924.7 noch einmal deutlicher aufgeführt.

Aufgrund ungünstiger Verhältnisse im Behälter kann der Fall auftreten, dass sich ein bestimmtes Echo einer Echokurve nicht eindeutig einem Track zuordnen lässt oder dass dieses Echo in der Echokurve nicht zu erkennen ist, da es beispielsweise im Rauschen untergegangen ist.

Auch kann der Fall auftreten, dass sich die physikalischen Verhältnisse im Behälter ändern, beispielsweise weil sich die Zusammensetzung des Füllmediums verändert.

Solche Ereignisse können zu ungenauen Messungen führen oder eine Bestimmung des Füllstandes zu einem bestimmten Zeitpunkt sogar unmöglich machen.

US 2006/0137446 A1 und EP 2 309 235 A1 beschreiben jeweils ein Füllstandmessgerät, welches einen ersten Track einer ersten Gruppe von Echos und einen zweiten Track einer zweiten Gruppe von Echos bestimmen kann.

EP 2 148 219 A1 beschreibt die Prozessierung von Puls-Echo-Messsignalen. Auch hier werden mehrere Tracks bestimmt.

Zusammenfassung der Erfindung

Es ist eine Aufgabe der Erfindung, die Bestimmung von Füllständen zu verbessern.

Gemäß einem ersten Aspekt der Erfindung ist ein Laufzeit-Füllstandmessgerät angegeben, welches eine Sendeeinheit, eine Empfangseinheit und eine Auswerteeinheit aufweist. Die Sendeeinheit dient dem Aussenden eines Sendesignals, welches an einer Füllgutoberfläche eines Füllmediums (das sich beispielsweise in einem Behälter befindet) und zumindest einem zweiten Reflektor reflektiert wird. Das Laufzeit-Füllstandmessgerät sendet also das Sendesignal in Richtung Füllgutoberfläche aus.

Die Empfangseinheit dient dem Erfassen des reflektierten Sendesignals (auch Empfangssignal, Empfangsimpuls oder Echokurve genannt). Bei der Empfangseinheit kann es sich um eine eigenständige Einheit handeln. Sie kann sich aber auch bestimmte Bauteilgruppen mit der Sendeeinheit teilen. Im Falle eines Füllstandradars handelt es sich bei der gemeinsamen Bauteilgruppe beispielsweise um die Sende-/Empfangsantenne.

Das reflektierte Sendesignal ist eine Echokurve, die im Falle mehrere Reflektoren mehrere Echos aufweist. Allerdings können diese Echos in der Echokurve nicht immer klar erkannt werden, da deren Amplitude in manchen Fällen zu gering ist oder da sie teilweise miteinander überlappen.

Die Auswerteeinheit dient der Durchführung eines Tracking-Verfahrens zur Gruppierung von jeweils auf identische Reflektoren zurückzuführenden Echos und von zu verschiedenen Zeiten erfassten Echokurven.

Das Tracking-Verfahren wird im Folgenden noch einmal unter Bezugnahme auf die Figuren erklärt. Letztendlich nimmt das Laufzeit-Füllstandmessgerät Echokurven zu verschiedenen Zeiten auf, so dass sich eine zeitliche Abfolge von Echokurven ergibt, welche die zeitliche Entwicklung der Verhältnisse im Behälter widerspiegeln. Die Auswerteeinheit kann nun jede einzelne Echokurve analysieren und die Lage der Maxima bzw. Minima feststellen.

Aufgabe des Tracking-Verfahrens ist es nun, jedes Maximum bzw. Minimum einem Reflektor im Behälter zuzuordnen oder als nicht zuordenbares Echo zu klassifizieren. Erfolgt diese Zuordnung auf korrekte Weise, erhält man daraus die zeitliche Entwicklung des Füllstands und die zeitliche Entwicklung der Positionen der verschiedenen anderen Reflektoren im Tank. Die zeitliche Entwicklung der Positionen kann dann in einem Diagramm aufgezeichnet werden.

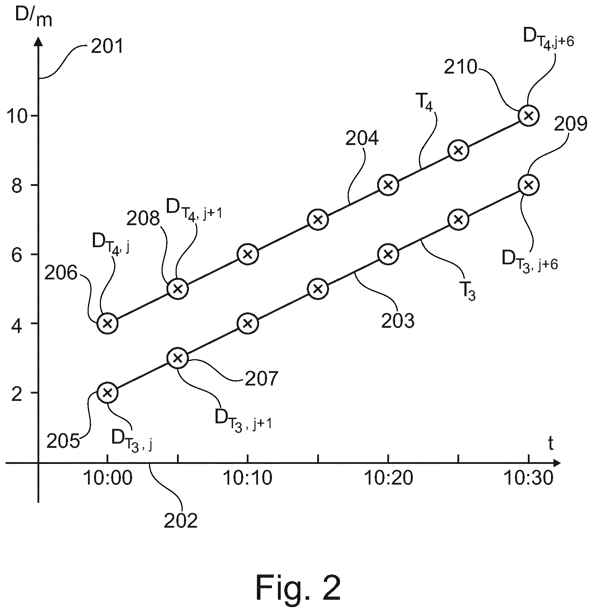

Geht man nun von einer konstanten Entnahme- oder Befüllungsrate im Behälter aus, kann man die einzelnen Messpunkte (also die aus den aufeinanderfolgenden Echokurven berechneten elektrischen Distanzen bzw. Positionen der Reflektoren; hierunter fällt auch die Position der Füllgutoberfläche) näherungsweise durch ein Geradensegment abbilden, wie dies beispielsweise in Fig. 2 gezeigt ist. Die Bildung von Geradensegmenten ist nur ein Ausführungsbeispiel eines speicheroptimierten Trackingverfahrens. Jede andere Verbindungslinie, welche die zurückgelegt Spur eines Echos, das von einer Reflexionsstelle stammt, anzeigt, ist an dieser Stelle denkbar. Die Verbindung der Echopositionen, an denen sich ein Echo eines Tracks zu vorherigen Zeitpunkten befand, kann somit durch einen beliebigen Kurvenzug erfolgen. Im einfachsten Fall entspricht dies einer Geraden. Jedoch können auch Polynome höhere Ordnung oder sogar nichtlineare Funktionen je nach Situation verwendet werden.

Ändert sich nun die Befüllungsrate oder die Entnahmerate des Füllguts, führt dies bei einem Tracking Verfahren, welches auf der Segmentbildung von Geraden basiert, zu einem Knick in der berechneten Kurve. In diesem Falle handelt es sich also um zwei aneinandergesetzte Geradensegmente mit unterschiedlicher Steigung.

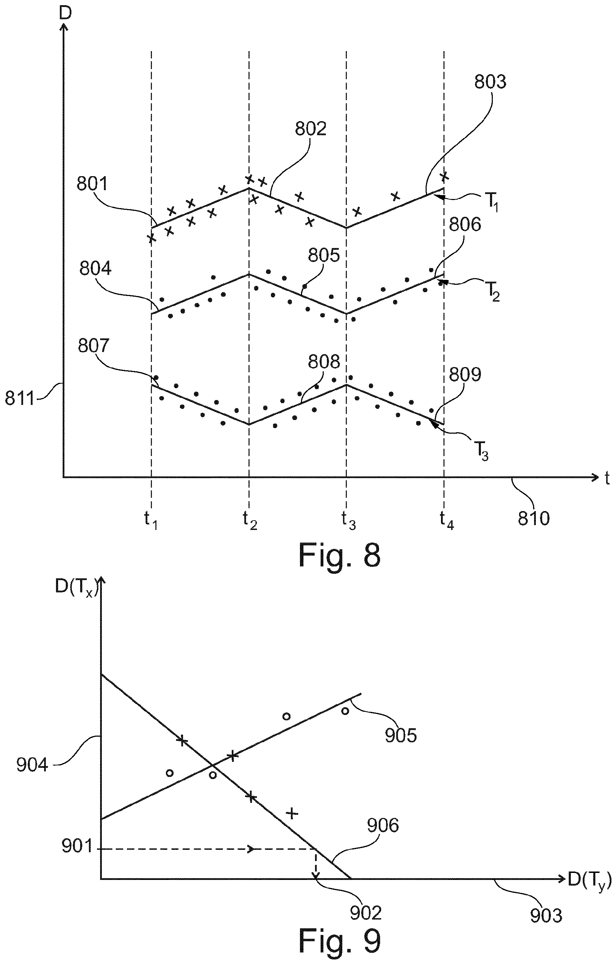

Da hierfür die elektrischen Distanzen und nicht die tatsächlichen, physikalischen Distanzen berücksichtigt werden, ändert sich mit steigendem oder sinkendem Füllstand auch die Position des Bodenechos oder anderer stationärer Reflektoren, die sich unterhalb der Füllgutoberfläche befinden. Dies ist schematisch in Fig. 8 gezeigt.

Bei diesen aneinandergesetzten Geradensegmenten spricht man dann von Tracks. Fig. 8 zeigt drei solche Tracks $T_1$, $T_2$, $T_3$.

Einer dieser Tracks entspricht im Regelfall der Position der Füllgutoberfläche zu verschiedenen Zeiten, ein anderer Track der Position des Bodenechos und ein dritter Track beispielsweise der Position eines stationären Reflektors unterhalb der Füllgutoberfläche, der Position einer Trennschicht zwischen zwei verschiedenen Füllmedien oder dem Sondenende im Falle einer Füllstandmessung mit geführten Wellen.

Die Auswerteeinheit des Laufzeit-Füllstandmessgeräts ist somit ausgeführt zum Bestimmen eines ersten Tracks einer ersten Gruppe von Echos, die auf einen ersten Reflektor (beispielsweise Füllgutoberfläche, Behälterboden, etc.) zurückzuführen sind, und eines zweiten Tracks einer zweiten Gruppe von Echos, die auf einen zweiten Reflektor (in diesem Fall beispielsweise Behälterboden, Füllgutoberfläche, etc.) zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten (also zu den verschiedenen Zeitpunkten, an denen die verschiedenen Sendesignale ausgesandt wurden) beschreibt.

Weiter ist die Auswerteeinheit zum Bestimmen eines linearen Verhältnisses zwischen dem ersten Track und dem zweiten Track ausgeführt.

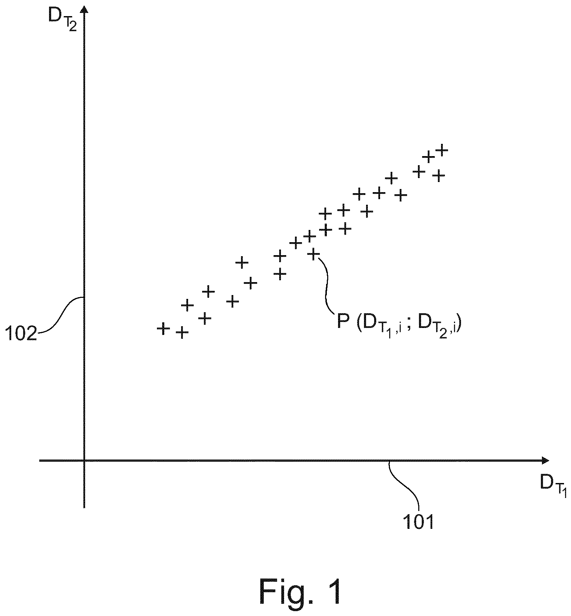

Bei diesem linearen Verhältnis handelt es sich um einen funktionalen Zusammenhang zwischen allen Positionen, die ein erster Track durchlaufen hat, und allen weiteren Positionen, die ein zweiter Track durchlaufen hat.. Wie dieser funktionale Zusammenhang berechnet wird, ist insbesondere anhand der Figuren 1 bis 4 weiter unten erklärt.

Da sich nun die elektrischen Positionen der ortsfesten Reflektoren unterhalb der Füllgutoberfläche auf entsprechende Weise verändern wie die Position der Füllgutoberfläche selbst, besteht zwischen jeweils zwei Tracks ein aus mathematischer Sicht linearer Zusammenhang bzw. ein lineares Verhältnis, welches mit Hilfe der verschiedenen Echokurven abgeschätzt werden kann.

Nach der Bestimmung des linearen Verhältnisses zwischen dem ersten Track und dem zweiten Track kann dann die Auswerteeinheit ein erstes Echo einer weiteren Echokurve dem ersten Track zuordnen. Diese weitere Echokurve ist beispielsweise zu einem späteren Zeitpunkt als die zur Bestimmung des linearen Verhältnisses zwischen den beiden Tracks hinzugezogenen zeitlich aufeinander folgenden Echokurven aufgenommen. Es handelt sich hier also um eine neue Messung.

Die Auswerteeinheit kann dann eine oder mehrere Unbekannte aus dem linearen Verhältnis zwischen dem ersten Track und dem zweiten Track bestimmen.

Bei der Unbekannten handelt es sich beispielsweise um die erwartete Position eines zweiten Echos der weiteren Echokurve. Hierfür zieht die Auswerteeinheit neben dem linearen Verhältnis noch die Position eines ersten Echos in der weiteren Echokurve, welches dem ersten Track zugeordnet wird, heran.

Aus Kenntnis des linearen Zusammenhangs zwischen den beiden Tracks und eines weiteren Messpunktes (die Position eines Echos einer weiteren Echokurve), welcher dem ersten Track zugeordnet wird, kann dann also die erwartete Position des entsprechenden anderen Echos (des zweiten Tracks) berechnet bzw. abgeschätzt werden.

Die Erfindung bietet somit die Möglichkeit, unabhängig von Amplitudenverhältnissen oder Befüllgeschwindigkeiten das Füllstandecho auch bei Anwesenheit von Störechos, Bodenechos oder Mehrfachechos sicher zu verfolgen.

Da die Auswerteeinheit das Verhältnis zwischen zwei beliebigen Tracks bestimmen kann, lässt sich dieses Verfahren nicht nur für das Füllstandecho, sondern auch für die anderen Echos der Echokurve einsetzen.

Gemäß einer Ausführungsform der Erfindung handelt es sich bei der ersten Gruppe von Echos um die an der Füllgutoberfläche reflektierten Sendesignale.

Gemäß einer weiteren Ausführungsform der Erfindung handelt es sich bei der Unbekannten um die erwartete Position eines dem zweiten Track zuzuordnenden Echos einer weiteren Echokurve, wobei die weitere Echokurve zu einem späteren Zeitpunkt aufgenommen wurde, als die oben beschriebenen Echokurven.

Gemäß einer weiteren Ausführungsform der Erfindung handelt es sich bei der Unbekannten um die Dielektrizitätszahl des Füllmediums.

Gemäß einer weiteren Ausführungsform der Erfindung handelt es sich bei dem Laufzeit-Füllstandmessgerät um ein TDR-Füllstandmessgerät, wobei es sich bei der Unbekannten um die Länge einer Sonde des TDR-Füllstandmessgeräts handelt.

Gemäß einer weiteren Ausführungsform der Erfindung ist die Auswerteeinheit ausgeführt, aus der bestimmten Länge der Sonde durch Vergleich mit der tatsächlichen Sondenlänge zu erkennen, ob die Sonde verschmutzt ist.

Gemäß einer weiteren Ausführungsform der Erfindung ist die Auswerteeinheit ausgeführt, aus der bestimmten Länge der Sonde durch Vergleich mit der tatsächlichen Sondenlänge eine Güte der (bereits bestimmten) Dielektrizitätszahl zu berechnen. In diesem Fall wird davon ausgegangen, dass die Sonde nicht verschmutzt ist.

Gemäß einer weiteren Ausführungsform der Erfindung handelt es sich bei der Unbekannten um die Höhe des Behälters, in dem sich das Füllmedium befindet, oder um die Position eines stationären Reflektors im Behälter, der sich unterhalb der Füllgutoberfläche befindet.

Gemäß einer weiteren Ausführungsform der Erfindung erfolgt die Bestimmung der Tracks und des linearen Verhältnisses zwischen jeweils zwei Tracks durch ein Abschätzungsverfahren.

So können die einzelnen (elektrischen) Positionen der jeweils einem Track zugehörigen Echos der verschiedenen Echokurven durch ein oder mehrere Geradensegmente angenähert werden.

Gemäß einem weiteren Aspekt der Erfindung erfolgt die Bestimmung des linearen Verhältnisses zwischen dem ersten Track und dem zweiten Track durch ein Rekursionsverfahren.

Gemäß einem weiteren Aspekt der Erfindung ist ein Laufzeit-Füllstandmessverfahren zum Durchführen eines Tracking-Verfahrens zur Gruppierung von jeweils auf identische Reflektoren zurückzuführenden Echos von zu verschiedenen Zeiten erfassten Echokurven angegeben. Das Verfahren weist die folgenden Schritte auf:

Aussenden eines Sendesignals, welches an einer Füllgutoberfläche eines Füllmediums und zumindest einem zweiten Reflektor reflektiert wird;

Erfassen des reflektierten Sendesignals, bei dem es sich um eine Echokurve handelt, die mehrere Echos aufweist;

Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt;

Bestimmen eines linearen Verhältnisses zwischen den einzelnen Positionen des ersten Tracks und den Positionen deszweiten Tracks; und

Bestimmen einer oder mehrerer Unbekannten aus dem linearen Verhältnis zwischen dem ersten Track und dem zweiten Track.

Das Verfahren kann auch weitere der oben und im Folgenden beschriebenen Schritte aufweisen.

Gemäß einem weiteren Aspekt der Erfindung ist ein Prozessor zum Durchführen eines Tracking-Verfahrens zur Gruppierung von jeweils auf identische Reflektoren zurückzuführenden Echos von zu verschiedenen Zeiten erfassten Echokurven angegeben. Bei dem Tracking-Verfahren handelt es sich um das oben und im Folgenden beschriebene Verfahren.

Gemäß einem weiteren Aspekt der Erfindung ist ein computerlesbares Medium angegeben, auf dem ein Programm gespeichert ist, das, wenn es auf einem Prozessor eines Laufzeit-Füllstandmessgeräts ausgeführt wird, den Prozessor anleitet, die oben und im Folgenden beschriebenen Verfahrensschritte durchzuführen.

Gemäß einem weiteren Aspekt der Erfindung ist ein Programmelement angegeben, das, wenn es auf einem Prozessor eines Laufzeit-Füllstandmessgeräts ausgeführt wird, den Prozessor anleitet, die oben und im Folgenden beschriebenen Schritte durchzuführen.

Im Folgenden werden mit Verweis auf die Figuren Ausführungsbeispiele der Erfindung beschrieben.

Kurze Beschreibung der Figuren

Fig. 1 zeigt eine diagrammatische Darstellung des Zusammenhangs von Trackpositionen (elektrischen Distanzen von Reflektoren), die aus zeitlich aufeinanderfolgenden Echokurven gewonnen wurden, gemäß einem Ausführungsbeispiel der Erfindung.

Fig. 2 zeigt die zeitlichen Verläufe zweier Tracks.

Fig. 3 zeigt eine diagrammatische Darstellung des linearen Verhältnisses von Trackpositionen zweier Tracks gemäß einem Ausführungsbeispiel der Erfindung.

Fig. 4 zeigt ein Verfahren zur Reduktion der Kombinatorik bei der Füllstandbestimmung gemäß einem Ausführungsbeispiel der Erfindung.

Fig. 5 zeigt ein Füllstandmessgerät mit einem Füllgutbehälter gemäß einem Ausführungsbeispiel der Erfindung.

Fig. 6 zeigt ein anderes Füllstandmessgerät mit einem Füllgutbehälter gemäß einem Ausführungsbeispiel der Erfindung.

Fig. 7A zeigt eine zu einer ersten Zeit aufgenommene Echokurve.

Fig. 7B zeigt eine zu einem zweiten Zeitpunkt aufgenommene Echokurve.

Fig. 8 zeigt die zeitliche Entwicklung mehrerer Tracks.

Fig. 9 zeigt die linearen Verhältnisse zwischen jeweils zwei Tracks.

Fig. 10 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich. Werden in verschiedenen Figuren die gleichen Bezugszeichen verwendet, so können diese gleiche oder ähnliche Elemente bezeichnen. Gleiche oder ähnliche Elemente können aber auch durch verschiedene Bezugszeichen bezeichnet sein.

Im Folgenden sei eine mögliche Ausführung der Auswerteinheit eines Füllstandmessgerätes dargestellt. Die aufgenommene Echokurve kann zunächst einer Aufbereitung unterzogen werden. Durch eine gezielte digitale Aufwertung des Signals z.B. durch eine digitale Filterung ist es einem Verfahren zur Echoextraktion leichter möglich, die signifikanten Signalanteile aus der Echokurve zu bestimmen.

Die extrahierten Echos können zur weiteren Verarbeitung beispielsweise in Form einer Liste gespeichert werden. Es sind jedoch auch weitere Möglichkeiten für den Zugriff auf die Daten möglich als die Speicherung in einer Liste. Der Funktionsblock Tracking ordnet die Echos einer Echokurve zum Zeitpunkt $t_i$ den Echos der darauffolgenden Echokurve zum Zeitpunkt $t_{i+1}$ zu, wobei die Echos dieselbe physikalische Reflexionsstelle und dieselbe Wegstrecke durchlaufen haben (also durch Reflexion des Sendesignals am selben Reflektor erzeugt wurden).

Trackingverfahren sind bekannt. Nähere Informationen finden sich beispielsweise in WO 2009/037000 A2.

Ein Kernaspekt der Erfindung ist es, die zeitliche Entwicklung zweier Tracks, das heißt die zeitliche Entwicklung der Positionen zweier verschiedener physikalischer Reflexionsstellen bzw. zweier Reflexionen, untereinander in Relation zu setzen und daraus die Parameter eines linearen Zusammenhangs zu ermitteln. Jeder Track besteht aus einer Folge von Positionswerten, die aus den Echos einer Echokurve ermittelt wurden. Da bei Füllstandmessgeräten der Abstand vom Sensor zum Füllgut gemessen werden soll, wird neben dem Begriff Position auch der Begriff Distanz verwendet.

Fig. 1 soll den Sachverhalt der Relation zwischen zwei Tracks näher erläutern. Das Achsenkreuz zeigt eine Punktwolke, die aus den Distanzpaaren der einzelnen Positionswerte zweier Tracks gebildet wird. Beispielsweise sind die Tracks als Track $T_1$ und Track $T_2$ bezeichnet. Es kann jedoch jede andere denkbare Kombination aus zwei verschiedenen Tracks herangezogen werden.

Jedes Distanzpaar ist durch ein Kreuz markiert. Die Abszissenachse (x-Achse 101) umfasst die Distanz $D$ des Tracks $T_1$, die Ordinatenachse (y-Achse 102) umfasst die Distanz $D$ des Tracks $T_2$. Diese Anordnung ist nicht zwingend erforderlich. So könnte auch Abszissenachse und Ordinatenachse gegeneinander getauscht werden.

Auch die Maßeinheit der Achsenskalierung ist für die Erfindung irrelevant. So steht hier die elektrische Distanz $D$ nur beispielhaft. Auch eine zeitliche Skalierung der Position gemäß der Echokurve wäre möglich. Ein Distanzpaar ist in Figur 1 zur genaueren Erläuterung gesondert markiert. Das Distanzpaar $P(D_{T_1,i}; D_{T_2,i})$ beschreibt ein Wertepaar zweier Positionen von Track $T_1$ und Track $T_2$ zum Zeitpunkt i, an dem die Echokurve erzeugt wurde. Die anderen und nicht genauer bezeichneten Punkte im Diagramm stammen aus weiteren Echokurven, die zu anderen Zeitpunkten vom Sensor erfasst wurden. Eine neue vom Sensor erzeugte Echokurve, die aus einem weiteren Signalverarbeitungsdurchlauf stammt und deren Echos den Tracks zugeordnet wurden, würde das Diagramm um einen zusätzlichen Punkt erweitern.

Der in Fig. 1 dargestellte Zusammenhang der Positionen der beiden Tracks macht deutlich, dass sich die Positionen von Track $T_1$ und Track $T_2$ in Relation bringen lassen können. Das bedeutet, dass Track $T_1$ und Track $T_2$ in einem funktionalen Zusammenhang stehen. Eine Geradengleichung, die die Punktwolke beschreibt, dient dafür als Grundlage. Mathematisch lässt sich dieser Zusammenhang wie folgt beschreiben:

$$D_{T_2,k} = a_1 \cdot D_{T_1,k} + a_0 + e_k \qquad (1.1)$$

$D_{T_2,k}$ ist die Position des Tracks $T_2$ der Messung zum Zeitpunkt $k$

$D_{T_1,k}$ ist die Position des Tracks $T_1$ der Messung zum Zeitpunkt $k$

$a_0$ und $a_1$, sind die Parameter einer Geraden, die den linearen Zusammenhang zwischen der Position von Track $T_1$ und Track $T_2$ beschreiben.

$e_k$ ist der Fehler des Zusammenhangs für die Messung zum Zeitpunkt $k$.

Der Parameter $a_1$ der Funktion ist ohne Maßeinheit, wohingegen $a_0$, dieselbe Maßeinheit wie $D_{T_2,k}$ bzw. $D_{T_1,k}$ aufweist. $e_k$ trägt dieselbe Maßeinheit wie $D_{T_2,k}$ bzw. $D_{T_1,k}$. Die Postulierung eines Fehlers im gegebenen Zusammenhang ist notwendig, da so die Fehler des Modells zusammengefasst abgebildet werden. Die Parameter $a_1$ und $a_0$ sind abhängig von den gegebenen Eigenschaften der Messstelle, an welcher der Sensor zum Einsatz kommt. Zudem sind die Parameter abhängig vom Verlauf der Tracks, die miteinander in Relation gebracht werden.

Formel (1.1) ist nur eine Ausprägung des Zusammenhangs. Natürlich lässt sie sich auf jeden Track anwenden und bedarf nicht unbedingt Track $T_1$ und Track $T_2$ als Grundlage. Die Werte der Parameter $a_1$ und $a_0$ sind dann jedoch von dem Zusammenhang zwischen Track $T_1$ und Track $T_2$ verschieden.

Fig. 2 zeigt den beispielhaften Verlauf zweier Tracks ($T_3$ 203 und $T_4$ 204) über die Zeit. Die x-Achse 201 bezeichnet die Distanz in Metern und die y-Achse 202 bezeichnet die Messzeit t. Die Stützstellen 205, 207, 209,... und 206, 208, 210,... der Tracks 203, 204, die sich aus den Echopositionen der Echokurven zum jeweiligen Zeitpunkt $j$ ergeben, sind jeweils durch ein x markiert.

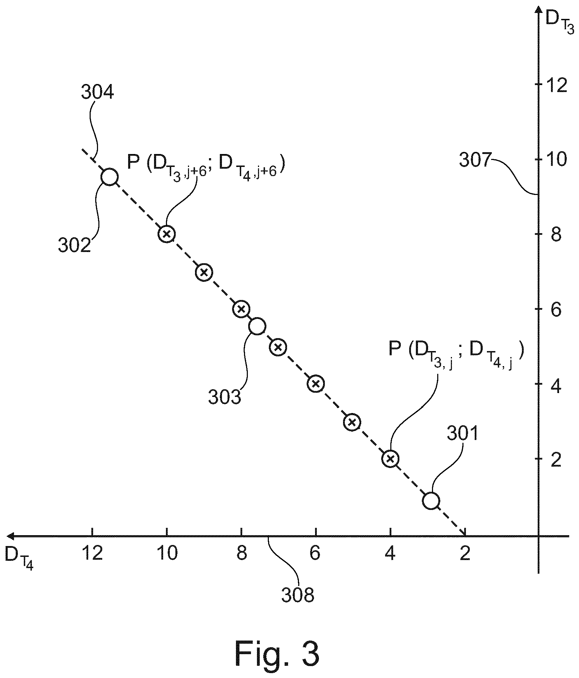

Überträgt man die Stützstellen aus Fig. 2 in ein Diagramm, das wie Fig. 1 die Relation zwischen beiden Tracks verdeutlicht, so erhält man das Diagramm in Fig. 3. Die x-Achse 307 umfasst hier die Positionen von Track $T_3$, die y-

Achse 308 umfasst hier die Positionen von Track $T_4$. Zudem ist der lineare Zusammenhang 304 zwischen den beiden Tracks in Form einer unterbrochenen Linie eingezeichnet. Es ist nun zu erkennen, dass neben den Stützstellen in Fig. 3 auch weitere Aussagen über den Zusammenhang beider Tracks getroffen werden können. Sowohl für Positionen 303, die sich zwischen den Stützstellen befinden als auch für Positionen 302 und 301, die sich neben den Stützstellen befinden, kann der Zusammenhang angewandt werden. Ferner bedeutet dies, dass, wenn die Position des einen Tracks bekannt ist, die Position des anderen Tracks vorhergesagt werden kann. Diese Vorhersage ist umkehrbar. Im Beispiel aus Fig. 3 bedeutet dies, dass die Position von Track $T_4$ aus der Position von Track $T_3$ vorhergesagt werden kann und umgekehrt. Zudem kann nicht nur eine Vorhersage getroffen werden, sondern auch eine Schätzung der Position eines Tracks angegeben werden, wenn eine Bestimmung der Position des Tracks aufgrund von ungünstigen Signalverhältnissen nicht möglich wäre.

Bestimmung der Parameter $a_0$ und $a_1$:

Die Parameter $a_0$ und $a_1$ können vom Sensor durch geeignete Parameterschätzverfahren, die einem Fachmann geläufig sind, selbständig bestimmt werden. Aufgrund des Fehlers im zugrundeliegenden Modell ist eine sogenannte Schätzung der Parameter vorteilhaft, die den Fehler über die Bestimmung der Parameter minimiert. Die Schätzung an sich kann auf unterschiedliche Weise erfolgen. Möglich ist die Anwendung gängiger Parameterschätzverfahren, wie zum Beispiel LS-Schätzer. LS-Schätzer werden in der Literatur ausführlich beschrieben. Eine Schätzung kann beispielsweise so gestaltet sein:

$$D_{T_2} = \hat{a}_1 \cdot D_{T_1} + \hat{a}_0$$

$D_{T_2}$ ist die Position des Tracks $T_2$
$D_{T_1}$ ist die Position des Tracks $T_1$
$\hat{a}_0$ und $\hat{a}_1$ sind die geschätzten Parameter einer Geraden, die den linearen Zusammenhang zwischen der Position von Track $T_1$ und Track $T_2$ beschreiben.

Um die Positionspaare nicht kontinuierlich im Speicher halten zu müssen, können die genannten Verfahren auch rekursiv implementiert werden. Die Schätzung kann zunächst fehlerhaft sein, verbessert sich aber mit steigender Anzahl an Wertepaaren. Es ist natürlich nötig, zuerst die Parameter zu ermitteln, bevor eine Vorhersage der aktuellen Position des einen Tracks aus der Position des anderen Track getroffen werden kann.

Die beschriebene Erfindung lässt sich nutzbringend erweitern. Die Echokurve zeigt häufig eine große Anzahl an Echos, was viele Tracks nach sich zieht. Im beschriebenen Verfahren werden im allgemeinen Fall alle Tracks untereinander in Bezug gesetzt. Das bedeutet, dass aus jedem einzelnen Track direkt eine Aussage über den Ort jedes anderen Tracks gemacht werden kann. Die Anzahl A der aufzustellenden funktionalen Zusammenhänge lässt sich in Abhängigkeit zu der Anzahl N an Tracks mit der Formel

$$A = N \cdot (N - 1)/2$$

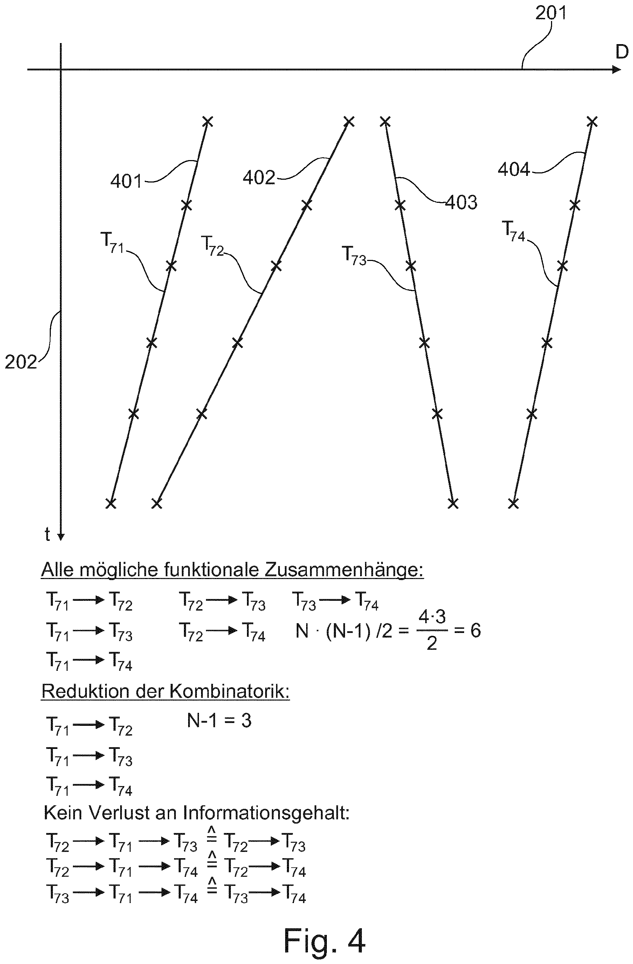

berechnen. Bei vier verfolgten Tracks müssen dann sechs Zusammenhänge erstellt, berechnet, gepflegt und gespeichert werden. Eine Erweiterung der Erfindung ergibt sich durch gezielte Reduktion der Kombinatorik. Fig. 4 zeigt die vollständige Auflistung bei vier verschiedenen Tracks. Die funktionalen Zusammenhänge sind durch einen Pfeil dargestellt. Die Richtung des Pfeils ist nur beispielhaft, da der Zusammenhang auch umkehrbar ist. Ist beispielsweise der Zusammenhang $T_{71} \rightarrow T_{72}$ bekannt, so ist auch der Zusammenhang $T_{72} \rightarrow T_{71}$ durch Bildung der Umkehrfunktion berechenbar. Weiterhin zeigt Fig. 4 eine Möglichkeit der Reduktion der Kombinatorik ohne dabei die Aussagekraft der Erfindung zu vermindern. Beispielhaft wurde die Reduktion anhand des Tracks $T_{71}$ durchgeführt. Die Zusammenhänge zwischen $T_{72}$ und $T_{73}$, $T_{72}$ und $T_{74}$ bzw. $T_{73}$ und $T_{74}$ können aus den Zusammenhänge $T_{71}$ und $T_{72}$, $T_{71}$ und $T_{73}$ bzw. $T_{71}$ und $T_{74}$ berechnet werden. Es ist dann nur noch die Speicherung und Erweiterung von

$$A = N - 1$$

(in Fig. 4 dann drei) funktionalen Zusammenhängen nötig. Die Reduktion setzt voraus, dass ein Track als Ursprung der Reduktion gewählt werden muss. Dieser Track könnte man auch als Zwischentrack bezeichnen. Im Beispiel aus Fig.4 ist dies Track $T_{71}$. Selbstverständlich könnte auch jeder andere Track als Zwischentrack der Reduktion gewählt werden. Dass kein Informationsgehalt verloren geht, zeigt die Berechnungskette aus Figur 7. Beispielsweise lässt sich der

Zusammenhang zwischen $T_{72} \rightarrow T_{73}$ aus den beiden Zusammenhängen $T_{71} \rightarrow T_{72}$ und $T_{71} \rightarrow T_{73}$ ermitteln. Dazu muss die Umkehrfunktion $T_{71} \leftarrow T_{72}$ von $T_{71} \rightarrow T_{72}$ gebildet werden. Anschließend lässt sich der erweiterte Zusammenhang $T_{72} \rightarrow T_{71} \rightarrow T_{73}$ aufstellen und den Ort von Track $T_{73}$ aus Track $T_{72}$ bestimmen ohne zuvor die Parameter des funktionalen Ausdrucks für den Zusammenhang $T_{72} \rightarrow T_{73}$ geschätzt zu haben. Hier ergeben sich Vorteile in der Performanz, da das Schätzen der Parameter sich als rechenintensiv erweist. Zudem wird Speicherplatz eingespart.

Kernaspekt der Erweiterung ist also, dass die Kombinatorik reduziert werden kann, wenn beim Berechnen der Position eines Tracks $T_A$ aus der Position eines Tracks $T_B$ immer über einen Zwischentrack $T_C$ gerechnet wird.

Ein Kernaspekt des beschriebenen Verfahrens liegt im Schätzen der Parameter einer Zielfunktion, die dann den Zusammenhang der Position zwischen zwei Tracks beschreibt. Wurden die Parameter der Zielfunktion während des Betriebs des Füllstandmessgeräts hinreichend gut ermittelt, so kann aus der Position des einen Tracks auf die Position eines anderen Tracks geschlossen werden. Da die Parameter abhängig von der Messstelle sind (Einbauort, Stutzen, Flansch, Behälterboden, Behälterdecke, Füllgut, Einbauten im Behälter), kann eine Parametrierung im Werk nicht erfolgen.

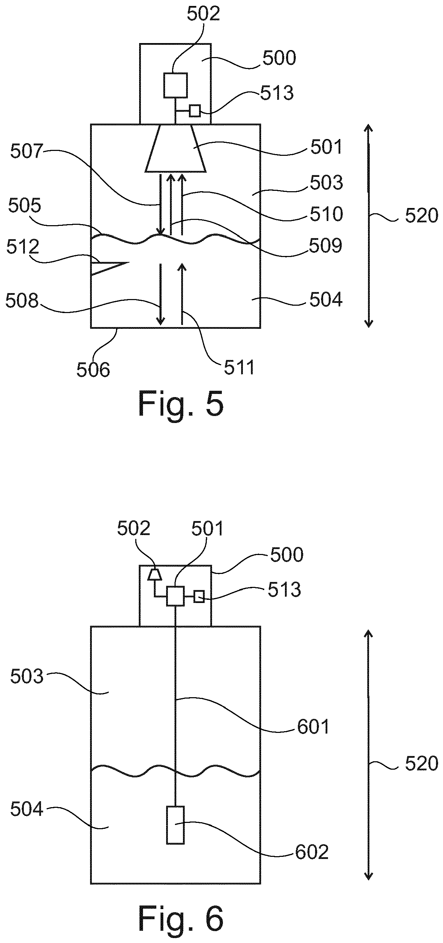

Fig. 5 zeigt ein Laufzeit-Füllstandmessgerät 500, das an oder in einem Behälter installiert ist. Bei dem Füllstandmessgerät 500 handelt es sich beispielsweise um ein Füllstandradar oder ein Ultraschallgerät. Dieses Laufzeit-Füllstandmessgerät 500 sendet freistrahlende Wellen, beispielsweise in Form von Impulsen, 507 in Richtung Füllgutoberfläche 505 aus. Im Falle eines Füllstandradars ist hierfür eine Antenne 501 vorgesehen, beispielsweise in Form einer Hornantenne. Dieses Sendesignal bzw. der Sendepuls 507 wird mit Hilfe einer Signalgeneratoreinheit 513 erzeugt und über die Sende-/Empfangeinheit 501 abgestrahlt. Das abgestrahlte Sendesignal 507 trifft nun auf die Füllgutoberfläche 505 des Füllguts 504, das sich im Behälter befindet. Davor durchläuft es das über der Füllgutoberfläche 505 befindliche Medium, beispielsweise die Behälteratmosphäre.

Ein Anteil des Sendesignals 507 wird nun an der Füllgutoberfläche reflektiert und bewegt sich als Echo 509 zurück zur Sende-/Empfangeinheit 501. Ein anderer Anteil des Sendesignals 507 tritt in das Füllmedium 504 ein und bewegt sich zum Boden 506 des Behälters (siehe Signalanteil 508). Dort wird es dann reflektiert und bewegt sich als sog. Bodenecho 511 zurück in Richtung Sende-/Empfangeinheit 501. Ein Teil dieses Bodenechos wird wieder zurückreflektiert (an der Füllgutoberfläche 505). Ein anderer Teil des Bodenechos 510 durchdringt jedoch die Füllgutoberfläche 505 und kann dann von der Sende-/Empfangeinheit 501 aufgenommen und an die Auswerteeinheit 502 geleitet werden.

Ein Teil des Sendesignals 507 kann auch an anderen Reflektoren reflektiert werden. Beispielhaft hierfür ist ein an der Behälterwand angebrachter Vorsprung 512 gezeigt, der sich unterhalb der Füllgutoberfläche befindet.

Fig. 6 zeigt ein weiteres Beispiel eines an einem Behälter eingebauten Laufzeit-Füllstandmessgeräts 500. Hierbei handelt es sich um ein TDR-Füllstandmessgerät, welches nach dem Prinzip geführter Wellen arbeitet. Es kann sich hierbei um geführte Mikrowellen oder andere wellenartige Sendesignal handeln, die entlang eines Drahtes 601 oder beispielsweise auch im Inneren eines Hohlleiters in Richtung Füllgutoberfläche und teilweise auch in das Füllgut hineingeführt werden. Am Ende des Drahtes 601 befindet sich beispielsweise ein Gewicht 602 zur Straffung des Drahtes.

Fig. 7A zeigt nun ein Beispiel für eine in der Auswerteeinheit aufgezeichnete Echokurve 703. Die Echokurve 703 weist zwei Minima 702, 704 und ein Maximum 701 auf.

An dieser Stelle sei erwähnt, dass die horizontale Achse 705 die elektrische Distanz (welche der Laufzeit der einzelnen Abschnitte der Echokurve 703 entspricht) und die Hochachse 706 die Amplitude der einzelnen Abschnitte der Echokurve 703 darstellt.

Bei dem Maximum 701 handelt es sich beispielsweise um das an der Füllgutoberfläche reflektierte Echo und bei dem Minimum 702 handelt es sich beispielsweise um das am Sondenende der Sonde 601, 602 der Fig. 6 reflektierte Echo oder um das am Behälterboden 506 der Fig. 5 reflektierte Echo.

Diese Echokurve ist zu einem Zeitpunkt $t_1$ aufgenommen.

Fig. 7B zeigt eine entsprechende Echokurve, die zu einem späteren Zeitpunkt $t_2$ aufgenommen wurde. Wie man an dieser Kurve erkennt, haben sich sowohl das Füllgutecho 701 als auch das Sondenende- bzw. Bodenecho 702 verschoben, allerdings in entgegengesetzte Richtungen. Dies liegt daran, dass sich das Sondenendeecho bzw. Bodenecho unterhalb der Füllgutoberfläche befindet.

Stellt die Auswerteeinheit nun fest, dass es sich bei dem Echo 701 um Echos handelt, die auf einen identischen Reflektor zurückzuführen sind (in diesem Fall auf Füllgutoberfläche) und stellt sie fest, dass die Echos 702 ebenfalls auf einem anderen, identischen Reflektor (Behälterboden oder Sondenende) zurückzuführen sind, so kann sie die Echos 701 zu einer ersten Gruppe und die Echos 702 zu einer zweiten Gruppe zusammenfassen. Werden nun mehrere Echokurven zu verschiedenen Zeitpunkten aufgenommen, können die elektrischen Distanzen der einzelnen Echos durch Tracks, z.B. in Form von aneinandergesetzten Geradensegmenten, dargestellt werden. Dies ist in Fig. 8 gezeigt. Die Querachse 810 bezeichnet die Zeitpunkte $t_i$, zu denen die einzelnen Echokurven gemessen wurden und die Hochachse 811 bezeichnet die elektrische Distanz, welche die verschiedenen Echos der einzelnen Echokurven zurückgelegt haben.

Der erste Track $T_1$ besteht aus drei Geradensegmenten 801, 802, 803, welche jeweils unterschiedliche Steigung aufweisen, je nachdem, mit welcher Rate der Behälter befüllt oder geleert wird. Geradensegment 801 beschreibt eine Behälterfüllung zwischen den Zeitpunkten t$_1$ bis t$_2$, Segment 802 ein Entleerung zwischen den Zeitpunkten t$_2$ bis t$_3$ und Segment 803 wieder eine Befüllung zwischen den Zeitpunkten t$_3$ und t$_4$.

Wie die Kreuze um die drei Geradensegmente 801, 802, 803 symbolisieren sollen, haben zahlreiche Messungen (Echokurvenerfassungen) stattgefunden, so dass die drei Geradensegmente 801 bis 803 mit hinreichender Genauigkeit bestimmt werden können.

Die aufgenommenen Echokurven weisen noch zwei weitere Gruppen von Echos auf, deren elektrische Distanzen jeweils durch die Geradensegmente 804, 805, 806 bzw. 807, 808, 809 angenähert werden.

Wie aus der Fig. 8 ersichtlich ist, befinden sich die Knicke der drei Tracks T$_1$ bis T$_3$ jeweils an denselben Zeitpunkten t$_2$, t$_3$ und t$_4$.

Nun können jeweils zwei der Tracks zueinander ins Verhältnis gesetzt werden, um den funktionalen Zusammenhang zwischen den einzelnen Tracks zu bestimmen. Nimmt man jeweils zwei Paare von Tracks, ergeben sich hieraus zwei angenäherte Geraden 905, 906 (siehe Fig. 9). Hier bezeichnet die Querachse 903 die elektrische Distanz der Echos einer ersten Echogruppe (also eines ersten Tracks Ty) und die Hochachse 904 bezeichnet die elektrische Distanz der Echos einer zweiten Echogruppe (also eines zweiten Tracks Tx). In diesem Zusammenhang wird in der Fachwelt auch oft von "Trackposition" gesprochen. Hierunter ist, wie oben beschrieben, die entsprechende elektrische Distanz, die ein bestimmtes Echo einer bestimmten Echokurve auf seinem Weg zur Empfangseinheit zurückgelegt hat, zu verstehen.

Durch die Bestimmung des funktionalen Zusammenhangs kann das Tracking der Echos verbessert werden.

Durch das Ermitteln des funktionalen Zusammenhangs zwischen beliebigen Tracks ist es möglich, die Position eines Tracks aus der Position eines zweiten Tracks zu bestimmen.

Der funktionale Zusammenhang kann in Form eines linearen Zusammenhang (im Kontext der Erfindung auch "lineares Verhältnis" genannt)

$$D_{T2} = \hat{a}_1 \cdot D_{T1} + \hat{a}_0$$

bestimmt werden. Dies ist bereits weiter oben beschrieben. Die Dachsymbole über den Parametern a$_0$ und a$_1$ sollen symbolisieren, dass es sich bei diesen Parametern um Schätzungen handelt.

Eine Klassifikation der Tracks ist nicht erforderlich. Unter Klassifikation ist hierbei zu verstehen, dass Aussage getroffen werden kann, ob es sich beispielsweise um den Track des Füllstand-, Boden-, eines Stör- oder eines Mehrfachechos handelt.

Erhält man Kenntnis über den Füllstand bzw. den dazugehörigen Füllstand-Track, können weitere unbekannte Größen berechnet werden.

## Bestimmung der Dielektrizitätszahl

Zur Bestimmung der Dielektrizitätszahl der elektromagnetischen Welle im zu messenden Medium benötigt man:

1. Track zum Füllstand
2. Track zu einer festen Reflexionsstelle (Echo) unterhalb des Füllstandes

    a. Behälterboden / Sondenende bei geführter Mikrowelle
    b. Störecho (Metallstrebe etc.).

In den nachfolgenden Formeln wird beispielhaft auf das Füllstandsecho und das Bodenecho verwiesen. Anstelle des Bodenechos kann aber auch ein anderes Echo, welches durch einen Reflektor hervorgerufen wird, der sich unterhalb der Füllgutoberfläche befindet, verwendet werden. Das Bodenecho dient nur als Beispiel:
Gemäß einer nicht näher aufgeführten Herleitung erhält man für den Parameter a$_1$ den Zusammenhang:

$$a_1 = \frac{\sqrt{\varepsilon_L \mu_L}}{\sqrt{\varepsilon_L \mu_L} - \sqrt{\varepsilon_B \mu_B}}$$

Der Index L steht hier beispielshaft für Luft und beschreibt das Medium oberhalb des zu messenden Mediums (Füllgut).

Der Index B steht hier beispielshaft für Boden und beschreibt das zu messende Medium.

Die zu messende Größe sei $\sqrt{\varepsilon_B \mu_B}$. Hieraus lassen sich Rückschlüsse auf die Beschaffenheit des Mediums ziehen. Für die Prozessindustrie ist dies von Vorteil, um Variationen der Stoffeigenschaft festzustellen.

Für $\sqrt{\varepsilon_B \mu_B}$ ergibt sich dann:

$$\sqrt{\varepsilon_B \mu_B} = \sqrt{\varepsilon_L \mu_L} - \frac{\sqrt{\varepsilon_L \mu_L}}{a_1}$$

Eine hinreichend genaue Näherung für $\sqrt{\varepsilon_L \mu_L}$ sei $\sqrt{\varepsilon_L \mu_L} = 1$.

Und damit:

$$\sqrt{\varepsilon_B \mu_B} = 1 - \frac{1}{a_1}$$

Für $\mu_B$ gilt für die relevanten Medien $\mu_B = 1$ und somit ist $\varepsilon_B$ berechenbar. $\varepsilon_B$ entspricht der Dielektrizitätszahl. Möchte man die Schätzung aufgrund der Messsicherheit nicht durchführen, so lassen sich die benötigten Werte selbstverständlich parametrieren, also durch wahre oder zumindest angenäherte Werte ersetzen.

**Bestimmung der Sondenlänge/Behälterhöhe/Ort eines stationären Reflektors**

Zur Bestimmung der Sondenlänge benötigt man:

1. Track zum Füllstand
2. Track zum Boden/Behälterboden

Gemäß einer nicht näher aufgeführten Herleitung erhält man für den Parameter $a_0$ den Zusammenhang:

$$a_0 = - \frac{\sqrt{\varepsilon_L \mu_L} \cdot \sqrt{\varepsilon_B \mu_B}}{\sqrt{\varepsilon_L \mu_L} - \sqrt{\varepsilon_B \mu_B}} \cdot d_{Bottom}$$

Mit obigen Näherungen gilt:

$$d_{Bottom} = - \frac{1 - \sqrt{\varepsilon_B \mu_B}}{\sqrt{\varepsilon_B \mu_B}} = \frac{a_0}{1 - a_1}$$

Wie bereits angesprochen, steht $d_{Bottom}$ allgemein für die Position des Bodens, des Sondenendes oder eines stationären Reflektors unterhalb der Füllgutoberfläche. Bei $d_{Bottom}$ handelt es sich um die physikalische Distanz zum entsprechenden stationären Reflektor.

Ein Vorteil dieses Verfahrens besteht darin, dass der Behälter nicht entleert werden muss, um die Position des Behälterbodens oder des Sondenendes zu bestimmen. Eine parameterlose Inbetriebnahme eines Radar-Füllstandsmessgeräts ist dadurch ermöglicht bzw. die Parametrierung erleichtert (Behälterhöhe / Sondenlänge muss nicht eingegeben werden).

**Erkennung von Verschmutzung**

Mit der bestimmten Sondenlänge (bei geführten Mikrowellen) kann, wenn die Sondenlänge vorab im Werk parametriert wurde oder der Kunde sie manuell eingegeben hat, eine verschmutze Sonde erkannt werden. Diese Funktion dient der Diagnose! Eine Verschmutzung der Sonde, sei dies durch eine lokale Anhaftung oder einer Verschmutzung / Benetzung der kompletten Sonde geschehen, bewirkt eine Reduktion der Ausbreitungsgeschwindigkeit der elektromagnetischen Welle. Das gemessene Sondenende weicht dann durch das parametrierte Sondenende ab, was eine Verschmutzung signalisiert.

Anschließend kann eine Verschmutzungsmeldung ausgegeben werden und/oder es kann eine automatische Korrektur der Messwerte erfolgen.

### Berechnung der Güte der bestimmten Dielektrizitätszahl

Die Berechnung der Parameter $a_0$ und $a_1$ erfolgt durch den Schätzer synchron. Bei dem Schätzer handelt es sich um ein Programm, das bei jeder Messung ablaufen kann. Somit lässt sich zu jeder berechneten Dielektrizitätszahl auch eine Sondenlänge bestimmen. Bei einer nicht verschmutzten Sonde bzw. einer Sonde, an der sich keine Ablagerungen gebildet haben, kann auf die Güte der bestimmten Dielektrizitätszahl geschlossen werden. Liegt die berechnete Sondenlänge in einem Bereich um die parametrierte Sondenlänge, so kann von einer gut bestimmten Dielektrizitätszahl ausgegangen werden. Natürlich lässt sich die Güte z.B. prozentual darstellen 0 % ... 100 %, je nachdem, wie weit die berechnete Sondenlänge und parametrierte Sondenlänge voneinander divergieren.

### Erkennung von bedeckten Störechos

Bei einem bedeckten Störecho handelt es sich um eine Reflektionsstelle, die sich unterhalb des zu messenden Mediums befindet bzw. bereits vom Medium bedeckt wurde. Der Signalanteil, der in das Medium eindringt, kann an einer bereits bedeckten Reflektionsstelle reflektiert werden und sich so als Echo in der Echokurve abzeichnen. Störecho bedeutet hier, dass es sich nicht um den Füllstand handelt und daher störend das Empfangssignal beeinflusst.

Zur Bestimmung bedeckter Störechos benötigt man:

1. Track zum Füllstand
2. Beliebiger Track unterhalb des Füllstandtracks

Zu jedem Track wird die "Bodenposition" $d_{Bottom}$ berechnet. Liegt $d_{Bottom}$ innerhalb der Sondenlänge, so muss es sich um ein bedecktes Störecho handeln, da die Projektion der Position auf eine metrisch messbare Größe innerhalb der Sondenlänge liegt. Liegt die berechnete Bodenposition außerhalb der Sondenlänge, so kann es sich nur um eine Mehrfachreflexion handeln.

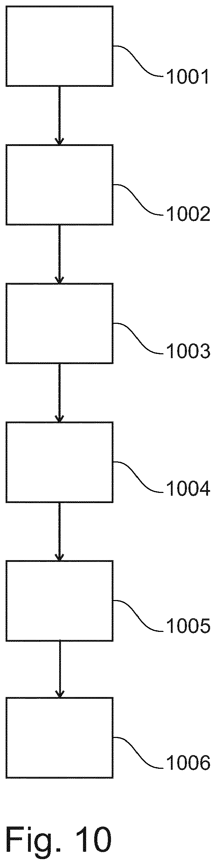

Fig. 10 zeigt ein Flussdiagramm eines Verfahrens gemäß einem Ausführungsbeispiel der Erfindung.

In Schritt 1001 wird ein Sendesignal in Form eines elektromagnetischen oder akustischen Impulses von einer Sendeeinheit in Richtung Füllgutoberfläche ausgesendet. Dieser Impuls wird dann von den unterschiedlichen Reflektoren im Behälter reflektiert und die daraus resultierende Echokurve, welche die entsprechenden unterschiedlichen Echos aufweist, wird von der Empfangseinheit erfasst (Schritt 1002).

Die Empfangseinheit gibt dann in Schritt 1003 die Echokurve an die Auswerteeinheit weiter, welche in Schritt 1004 ein Tracking-Verfahren zur Gruppierung der Echos durchführt. In Schritt 1005 wird ein lineares Verhältnis zwischen zwei Tracks gebildet und in Schritt 1006 werden aus diesem Verhältnis eine oder mehrere Unbekannte bestimmt.

### Patentansprüche

1. Laufzeit-Füllstandmessgerät (500), aufweisend:

    eine Sendeeinheit (501, 502) zum Aussenden eines Sendesignals (507), welches an einer Füllgutoberfläche (505) eines Füllmediums und zumindest einem zweiten Reflektor (506, 512) reflektiert wird;
    eine Empfangseinheit (501, 513) zum Erfassen des reflektierten Sendesignals (509, 510), bei dem es sich um eine Echokuve (703) handelt, die mehrere Echos (704, 701, 703) aufweist;
    eine Auswerteeinheit (513) zum Durchführen eines Tracking-Verfahrens zur Gruppierung von jeweils auf identische Reflektoren zurückzuführenden Echos von zu verschiedenen Zeiten erfassten Echokurven, wobei die Auswerteeinheit ausgeführt ist, die folgenden Schritte durchzuführen:

    (a) Bestimmen eines ersten Tracks einer ersten Gruppe von Echos (701), die auf einen ersten Reflektor zurückzuführen sind, und eines zweiten Tracks einer zweiten Gruppe von Echos (702), die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten ($t_1$, $t_2$, $t_3$, $t_4$) beschreibt; **gekennzeichnet durch**:

    (b) Bestimmen eines linearen Verhältnisses zwischen dem ersten Track und dem zweiten Track, welches mathematisch wie folgt beschrieben werden kann:

EP 2 739 946 B1

$$D_{T2,k} = a_1 \cdot D_{T1,k} + a_0 + e_k$$

wobei $D_{T_2,k}$ die Position des Tracks $T_2$ der Messung zum Zeitpunkt $k$ ist;
wobei $D_{T_1,k}$ die Position des Tracks $T_1$ der Messung zum Zeitpunkt $k$ ist;

(c) Bestimmen einer oder mehrerer Unbekannten aus dem linearen Verhältnis zwischen dem ersten Track und dem zweiten Track.

**2.** Laufzeit-Füllstandmessgerät nach Anspruch 1,
wobei es sich bei der ersten Gruppe von Echos um an der Füllgutoberfläche (505) reflektiere Sendesignale (509) handelt.

**3.** Laufzeit-Füllstandmessgerät nach einem der vorhergehenden Ansprüche,
wobei es sich bei der Unbekannten um die erwartete Position eines dem zweiten Track zuzuordnenden Echos einer weiteren Echokurve handelt, wobei die weitere Echokuve zu einem späteren Zeitpunkt aufgenommen wurde als die anderen Echokurven.

**4.** Laufzeit-Füllstandmessgerät nach einem der vorhergehenden Ansprüche,
wobei es sich bei der Unbekannten um die Dielektrizitätszahl des Füllmediums (504) handelt.

**5.** Laufzeit-Füllstandmessgerät nach einem der vorhergehenden Ansprüche,
wobei das Laufzeit-Füllstandmessgerät (500) ein TDR Füllstandmessgerät ist; wobei es sich bei der Unbekannten um die Länge einer Sonde (601, 602) des TDR Füllstandmessgeräts handelt.

**6.** Laufzeit-Füllstandmessgerät nach Anspruch 5,
wobei die Auswerteeinheit (513) ausgeführt ist, aus der bestimmten Länge der Sonde (601, 602) durch Vergleich mit der tatsächlichen Sondenlänge zu erkennen, ob die Sonde verschmutzt ist.

**7.** Laufzeit-Füllstandmessgerät nach Anspruch 5 oder 6,
wobei die Auswerteeinheit (513) ausgeführt ist, aus der bestimmten Länge der Sonde (601, 602) durch Vergleich mit der tatsächlichen Sondenlänge eine Güte der bestimmten Dielektrizitätszahl zu berechnen.

**8.** Laufzeit-Füllstandmessgerät nach einem der vorhergehenden Ansprüche,
wobei es sich bei der Unbekannten um die Höhe (520) eines Behälters, in dem sich das Füllmedium befindet, oder die Position eines stationären Reflektors (512, 506) im Behälter handelt.

**9.** Laufzeit-Füllstandmessgerät nach einem der Ansprüche 5 bis 8,
wobei die Auswerteeinheit (513) ausgeführt ist, die folgenden Schritte durchzuführen:

Berechnung der Position des Behälterbodens $d_{Bottom}$;
Bestimmung, ob die Berechnete Position des Behälterbodens oberhalb des unteren Endes der Sonde liegt;
Klassifizierung der berechneten Position als die Position eines Reflektors, bei dem es sich nicht um den Behälterboden handelt, falls die Berechnete Position des Behälterbodens oberhalb des unteren Endes der Sonde liegt.

**10.** Laufzeit-Füllstandmessgerät nach einem der vorhergehenden Ansprüche,
wobei die Bestimmung der Tracks und des linearen Verhältnisses zwischen dem ersten Track und dem zweiten Track durch ein Abschätzungsverfahren erfolgt.

**11.** Laufzeit-Füllstandmessgerät nach einem der vorhergehenden Ansprüche,
wobei die Bestimmung des linearen Verhältnisses zwischen dem ersten Track und dem zweiten Track durch ein Rekursionsverfahren erfolgt.

**12.** Laufzeit-Füllstandmessverfahren zum Durchführen eines Tracking-Verfahrens zur Gruppierung von jeweils auf identische Reflektoren zurückzuführenden Echos von zu verschiedenen Zeiten erfassten Echokurven, das Verfahren aufweisend die Schritte:

Aussenden eines Sendesignals, welches an einer Füllgutoberfläche (505) eines Füllmediums (504) und zumindest einem zweiten Reflektor (512, 506) reflektiert wird;

Erfassen des reflektierten Sendesignals (509, 510), bei dem es sich um eine Echokuve (703) handelt, die mehrere Echos (704, 701, 702) aufweist;

Bestimmen eines ersten Tracks einer ersten Gruppe von Echos (701), die auf einen ersten Reflektor zurückzuführen sind, und eines zweiten Tracks einer zweiten Gruppe von Echos (702), die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten ($t_1$, $t_2$, $t_3$, $t_4$) beschreibt; **gekennzeichnet durch**:

Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;
wobei $D_{T1,k}$ die Position des Tracks $T_1$ der Messung zum Zeitpunkt $k$ ist;

Bestimmen einer oder mehrerer Unbekannten aus dem linearen Verhältnis zwischen dem ersten Track und dem zweiten Track.

**13.** Prozessor (513) zum Durchführen eines Tracking-Verfahrens zur Gruppierung von jeweils auf identische Reflektoren zurückzuführenden Echos von zu verschiedenen Zeiten erfassten Echokurven, wobei der Prozessor zum Durchführen der folgenden Schritte ausgeführt ist:

Bestimmen eines ersten Tracks einer ersten Gruppe von Echos (701), die auf einen ersten Reflektor zurückzuführen sind, und eines zweiten Tracks einer zweiten Gruppe von Echos (702), die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten ($t_1$, $t_2$, $t_3$, $t_4$) beschreibt; **gekennzeichnet durch**:

Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;
wobei $D_{T1,k}$ die Position des Tracks $T_1$ der Messung zum Zeitpunkt $k$ ist;

Bestimmen einer oder mehrerer Unbekannten aus dem linearen Verhältnis zwischen dem ersten Track und dem zweiten Track.

**14.** Computerlesbares Medium, auf dem ein Programm zum Durchführen eines Tracking-Verfahrens zur Gruppierung von jeweils auf identische Reflektoren zurückzuführenden Echos von zu verschiedenen Zeiten erfassten Echokurven gespeichert ist, das, wenn es auf einem Prozessor eines Laufzeit-Füllstandmessgerätes ausgeführt wird, den Prozessor anleitet, die folgenden Schritte durchzuführen:

Bestimmen eines ersten Tracks einer ersten Gruppe von Echos (701), die auf einen ersten Reflektor zurückzuführen sind, und eines zweiten Tracks einer zweiten Gruppe von Echos (702), die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten ($t_1$, $t_2$, $t_3$, $t_4$) beschreibt; **gekennzeichnet durch**:

Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;
wobei $D_{T1,k}$ die Position des Tracks $T_1$ der Messung zum Zeitpunkt $k$ ist;

Bestimmen einer oder mehrerer Unbekannten aus dem linearen Verhältnis zwischen dem ersten Track und dem zweiten Track.

**15.** Programmelement zum Durchführen eines Tracking-Verfahrens zur Gruppierung von jeweils auf identische Reflektoren zurückzuführenden Echos von zu verschiedenen Zeiten erfassten Echokurven, das, wenn es auf einem Prozessor eines Laufzeit-Füllstandmessgerätes ausgeführt wird, den Prozessor anleitet, die folgenden Schritte durchzuführen:
Bestimmen eines ersten Tracks einer ersten Gruppe von Echos, die auf einen ersten Reflektor zurückzuführen sind, und eines zweiten Tracks einer zweiten Gruppe von Echos, die auf einen zweiten Reflektor zurückzuführen sind, wobei jeder Track die Laufzeit des entsprechenden Sendesignals von der Sendeeinheit zu dem dem Track zugeordneten Reflektor und zurück zur Empfangseinheit zu den verschiedenen Zeiten beschreibt; **gekennzeichnet durch**:

Bestimmen eines linearen Verhältnisses zwischen dem ersten Track und dem zweiten Track, welches mathematisch wie folgt beschrieben werden kann:

$$D_{T2,k} = a_1 \cdot D_{T1,k} + a_0 + e_k$$

wobei $D_{T2,k}$ die Position des Tracks $T_2$ der Messung zum Zeitpunkt $k$ ist;
wobei $D_{T1,k}$ die Position des Tracks $T_1$ der Messung zum Zeitpunkt $k$ ist;

Bestimmen einer oder mehrerer Unbekannten aus dem linearen Verhältnis zwischen dem ersten Track und dem zweiten Track.

## Claims

**1.** Delay-based fill level measurement device (500), comprising:

a transmission unit (501, 502) for emitting a transmission signal (507), which is reflected on a filling material surface (505) of a filling medium and at least on a second reflector (506, 512);
a reception unit (501, 513) for receiving the reflected transmission signal (509, 510), which is an echo curve (703) comprising a plurality of echoes (704, 701, 703);
an evaluation unit (513) for carrying out a tracking method for grouping echoes, which originate from identical reflectors in echo curves received at different times, the evaluation unit being configured to carry out the following steps:

(a) determining a first track of a first group of echoes (701) which originate from a first reflector and a second track of a second group of echoes (702) which originate from a second reflector, each track describing the time delay of the corresponding transmission signal from the transmission unit to the reflector assigned to the track and back to the reception unit at the various times ($t_1$, $t_2$, $t_3$, $t_4$)

**characterized in that**:

(b) determining a linear relationship between the first track and the second track, which can be described mathematically as:

$$D_{T2,k} = a_1 \cdot D_{T1,k} + a_0 + e_k$$

wherein $D_{T2,k}$ is the position of the track $T_2$ of the measurement at time $k$,
wherein $D_{T1,k}$ is the position of the track $T_1$ of the measurement at time $k$,
(c) determining one or more variables from the linear relationship between the first track and the second track.

2. Delay-based fill level measurement device according to claim 1, wherein the first group of echoes relates to transmission signals (509) reflected from the filling material surface (505).

3. Delay-based fill level measurement device according to any of the preceding claims, wherein the variable is an expected position of one of the echoes to be associated with the second track of a further echo curve, wherein the further echo curve recorded at a later time as the other echo curves.

4. Delay-based fill level measurement device according to any of the preceding claims, wherein the variable is the dielectric constant of the filling medium (504).

5. Delay-based fill level measurement device according to one of the preceding claims, wherein the delay-based fill level measurement device (500) is a TDR fill level measurement device, wherein the variable is the length of a probe (601, 602) of the TDR fill level measurement device.

6. Delay-based fill level measurement device according to claim 5, wherein the evaluation unit (513) is configured to determine based on a comparison of the specific length of the probe (601, 602) with the actual probe length, whether the probe is contaminated.

7. Delay-based fill level measurement device according to claim 5 or 6, wherein the evaluation (513) unit is configured to calculate a quality of the dielectric constant based on a comparison of the specific length of the probe (601, 602) with the actual probe length.

8. Delay-based fill level measurement device according to any of the preceding claims, wherein the variable is the height (520) of a container, in which the filling medium is arranged, or the position of a stationary reflector (512, 506) in the container.

9. Delay-based fill level measurement device according to any of claims 5 to 8, wherein the evaluation unit (513) is configured to perform the following steps:

calculating a position of the container bottom $d_{Bottom}$;
determining, whether the calculated position of the container bottom is located above the lower end of the probe;
classifying the calculated position as the position of a reflector, which is not the container bottom, if the calculated position of the container bottom is located above the lower end of the probe.

10. Delay-based fill level measurement device according to any of the preceding claims, wherein the determination of the tracks and the linear relationship between the first track and the second track is done based on an estimation method.

11. Delay-based fill level measurement device according to any of the preceding claims, wherein the determination of the linear relationship between the first track and the second track is done based on a recursion method.

12. Delay-based fill level measurement method for carrying out a tracking-method for grouping echoes, which originate from identical reflectors in echo curves received at different times, the method comprising the steps:

emitting a transmission signal, which is reflected on a filling material surface (505) of a filling medium (504) and at least on a second reflector (512, 506),
receiving the reflected transmission signal (509, 510), which is an echo curve (703) comprising a plurality of echoes (704, 701, 702),
determining a first track of a first group of echoes (701) which originate from a first reflector and a second track of a second group of echoes (702) which originate from a second reflector, each track describing a time delay of the corresponding transmission signal from a transmission unit to the reflector assigned to the track and back to a reception unit at various times ($t_1$, $t_2$, $t_3$, $t_4$)

**characterized in that**:

determining a linear relationship between the first track and the second track, which can be described mathematically as:

$$D_{T2,k} = a_1 \cdot D_{T1,k} + a_0 + e_k$$

wherein $D_{T2,k}$ is the position of the track $T_2$ of the measurement at time $k$,
wherein $D_{T1,k}$ is the position of the track $T_1$ of the measurement at time $k$,

determining one or more variables based on the linear relationship between the first track and the second track.

13. Processor (513) for carrying out a tracking-method for grouping echoes, which originate from identical reflectors in echo curves received at different times, wherein the processor is configured to carry out the following steps:
determining a first track of a first group of echoes (701) which originate from a first reflector and a second track of a second group of echoes (702) which originate from a second reflector, each track describing a time delay of the corresponding transmission signal from a transmission unit to the reflector assigned to the track and back to a reception unit at various times ($t_1$, $t_2$, $t_3$, $t_4$)
**characterized in that**:

determining a linear relationship between the first track and the second track, which can be described mathematically as:

$$D_{T2,k} = a_1 \cdot D_{T1,k} + a_0 + e_k$$

wherein $D_{T2,k}$ is the position of the track $T_2$ of the measurement at time $k$,
wherein $D_{T1,k}$ is the position of the track $T_1$ of the measurement at time $k$,

determining one or more variables based on the linear relationship between the first track and the second track.

14. Computer readable medium storing a program for carrying out a tracking-method for grouping echoes, which originate from identical reflectors in echo curves received at different times, which program, when executed by a processor of a delay-based fill level measurement device, instructs the processor to carry out the following steps:
determining a first track of a first group of echoes (701) which originate from a first reflector and a second track of a second group of echoes (702) which originate from a second reflector, each track describing a time delay of the corresponding transmission signal from a transmission unit to the reflector assigned to the track and back to a reception unit at various times ($t_1$, $t_2$, $t_3$, $t_4$)
**characterized in that**:

determining a linear relationship between the first track and the second track, which can be described mathematically as:

$$D_{T2,k} = a_1 \cdot D_{T1,k} + a_0 + e_k$$

wherein $D_{T2,k}$ is the position of the track $T_2$ of the measurement at time $k$,
wherein $D_{T1,k}$ is the position of the track $T_1$ of the measurement at time $k$,

determining one or more variables based on the linear relationship between the first track and the second track.

15. Program element for carrying out a tracking-method for grouping echoes, which originate from identical reflectors in echo curves captured at different times, which program element, when executed on a processor of a delay-based fill level measurement device, instructs the processor to carry out the following steps:
determining a first track of a first group of echoes (701) which originate from a first reflector and a second track of a second group of echoes (702) which originate from a second reflector, each track describing a time delay of the corresponding transmission signal from a transmission unit to the reflector assigned to the track and back to a reception unit at various times ($t_1$, $t_2$, $t_3$, $t_4$)
**characterized in that**:

determining a linear relationship between the first track and the second track, which can be described mathematically as:

$$D_{T2,k} = a_1 \cdot D_{T1,k} + a_0 + e_k$$

wherein $D_{T2,k}$ is the position of the track $T_2$ of the measurement at time $k$,
wherein $D_{T1,k}$ is the position of the track $T_1$ of the measurement at time $k$,

determining one or more variables based on the linear relationship between the first track and the second track.

**Revendications**

1. Appareil de mesure de niveau de remplissage basée sur le temps de propagation (500), comportant :

une unité d'émission (501, 502) pour émettre un signal d'émission (507) qui est réfléchi par une surface de matériau en vrac (505) d'un milieu de remplissage et par au moins un second réflecteur (506, 512),
une unité de réception (501, 513) pour détecter le signal d'émission réfléchi (509, 510) qui est une courbe d'échos (703) comportant plusieurs échos (704, 701, 703),
une unité d'évaluation (513) pour exécuter un procédé de suivi pour regrouper respectivement des échos à renvoyer vers des réflecteurs identiques et provenant de courbes d'échos détectées à différents instants, dans lequel l'unité d'évaluation est conçue pour exécuter les étapes suivantes consistant à :

(a) déterminer une première trace d'un premier groupe d'échos (701) qui doivent être renvoyés vers un premier réflecteur, et une seconde trace d'un second groupe d'échos (702) qui doivent être renvoyés vers un second réflecteur, dans lequel chaque trace décrit le temps de propagation du signal d'émission correspondant de l'unité d'émission jusqu'au réflecteur affecté à la trace et sur le retour jusqu'à l'unité de réception aux différents instants ($t_1$, $t_2$, $t_3$, $t_4$), **caractérisé par** les étapes consistant à :

(b) déterminer un rapport linéaire entre la première trace et la seconde trace, qui peut être mathématiquement décrit comme suit :

$$D_{T2,k} = a_1 \cdot D_{T1,k} + a_0 + e_k$$

dans lequel $D_{T2,k}$ est la position de la trace $T_2$ de la mesure à l'instant k,
dans lequel $D_{T1,k}$ est la position de la trace $T_1$ de la mesure à l'instant k,
(c) déterminer une ou plusieurs inconnues à partir du rapport linéaire entre la première trace et la seconde trace.

2. Appareil de mesure de niveau de remplissage basée sur le temps de propagation selon la revendication 1, dans lequel le premier groupe d'échos est constitué de signaux d'émission (509) réfléchis par la surface du matériau en vrac (505).

3. Appareil de mesure de niveau de remplissage basée sur le temps de propagation selon l'une des revendications précédentes, dans lequel les inconnues sont la position attendue d'un écho affecté à la seconde trace d'une courbe d'échos supplémentaire, la courbe d'échos supplémentaire ayant été reçue ultérieurement aux autres courbes d'échos.

4. Appareil de mesure de niveau de remplissage basée sur le temps de propagation selon l'une des revendications précédentes, dans lequel les inconnues sont la constante diélectrique du milieu de remplissage (504).

5. Appareil de mesure de niveau de remplissage basée sur le temps de propagation selon l'une des revendications précédentes, dans lequel l'appareil de mesure de niveau de remplissage basée sur le temps de propagation (500) est un appareil de mesure de niveau de remplissage par TDR, dans lequel les inconnues sont la longueur d'une sonde (601, 602) de l'appareil de mesure de niveau de remplissage par TDR.

**6.** Appareil de mesure de niveau de remplissage basée sur le temps de propagation selon la revendication 5, dans lequel l'unité d'évaluation (513) est conçue pour détecter, à partir de la longueur déterminée de la sonde (601, 602) si la sonde est encrassée, en établissant une comparaison avec la longueur de sonde effective.

**7.** Appareil de mesure de niveau de remplissage basée sur le temps de propagation selon la revendication 5 ou 6, dans lequel l'unité d'évaluation (513) est conçue pour calculer une grandeur de la constante diélectrique déterminée, à partir de la longueur déterminée de la sonde (601, 602), en établissant une comparaison avec la longueur de sonde effective.

**8.** Appareil de mesure de niveau de remplissage basée sur le temps de propagation selon l'une des revendications précédentes, dans lequel les inconnues sont la hauteur (520) d'un réservoir dans lequel se trouve le milieu de remplissage, ou la position d'un réflecteur fixe (512, 506) dans le réservoir.

**9.** Appareil de mesure de niveau de remplissage basée sur le temps de propagation selon l'une des revendications 5 à 8, dans lequel l'unité d'évaluation (513) est conçue pour exécuter les étapes suivantes consistant à :

calculer la position du fond de réservoir $d_{Bottom}$,
déterminer si la position calculée du fond du réservoir est au-dessus de l'extrémité inférieure de la sonde,
classer la position calculée comme étant la position d'un réflecteur qui n'est pas le fond de réservoir, dans le cas où la position calculée du fond de réservoir est au-dessus de l'extrémité inférieure de la sonde.

**10.** Appareil de mesure de niveau de remplissage basée sur le temps de propagation selon l'une des revendications précédentes, dans lequel la détermination de la trace et du rapport linéaire entre la première trace et la seconde trace s'effectue par un procédé d'estimation.

**11.** Appareil de mesure de niveau de remplissage basée sur le temps de propagation selon l'une des revendications précédentes, dans lequel la détermination du rapport linéaire entre la première trace et la seconde trace s'effectue par un procédé récursif.

**12.** Procédé de mesure de niveau de remplissage basée sur le temps de propagation destiné à mettre en oeuvre un procédé de suivi afin de regrouper des échos devant être respectivement renvoyés vers des réflecteurs identiques et provenant de courbes d'échos détectées à différents instants, le procédé comportant les étapes consistant à :

émettre un signal d'émission qui est réfléchi par une surface de matériau en vrac (505) d'un milieu de remplissage (504) et par au moins un second réflecteur (512, 506),
détecter le signal d'émission réfléchi (509, 510) qui est une courbe d'échos (703) comportant plusieurs échos (704, 701, 702),
déterminer une première trace d'un premier groupe d'échos (701) qui doivent être renvoyés vers un premier réflecteur, et une seconde trace d'un second groupe d'échos (702) qui doivent être renvoyés vers un second réflecteur, dans lequel chaque trace décrit le temps de propagation du signal d'émission correspondant provenant de l'unité d'émission jusqu'au réflecteur affecté à la trace et sur le retour jusqu'à l'unité de réception aux différents instants ($t_1$, $t_2$, $t_3$, $t_4$), **caractérisé par** les étapes consistant à :
déterminer un rapport linéaire entre la première trace et la seconde trace qui peut être décrit mathématiquement comme suit :

$$D_{T_2,k} = a_1 \cdot D_{T_1 k} + a_0 + e_k$$

dans lequel $D_{T2,k}$ est la position de la trace $T_2$ de la mesure à l'instant k,
dans lequel $D_{T1,k}$ est la position de la trace $T_1$ de la mesure à l'instant k,
déterminer une ou plusieurs inconnues à partir du rapport linéaire entre la première trace et la seconde trace.

**13.** Processeur (513) pour mettre en oeuvre un procédé de suivi pour le regroupement d'échos devant être respectivement renvoyés vers des réflecteurs identiques et provenant de courbes d'échos détectées à différents instants, dans lequel le processeur est conçu pour exécuter les étapes suivantes consistant à :

déterminer une première trace d'un premier groupe d'échos (701) qui doivent être renvoyés vers un premier réflecteur, et une seconde trace d'un second groupe d'échos (702) qui doivent être renvoyés vers un second réflecteur, dans lequel chaque trace décrit le temps de propagation du signal d'émission correspondant provenant de l'unité d'émission jusqu'au réflecteur affecté à la trace et sur le retour jusqu'à l'unité de réception aux différents instants ($t_1$, $t_2$, $t_3$, $t_4$), **caractérisé par** les étapes consistant à :

déterminer un rapport linéaire entre la première trace et la seconde trace qui peut être décrit mathématiquement comme suit :

$$D_{T2,k} = a_1 \cdot D_{T1,k} + a_0 + e_k$$

dans lequel $D_{T2,k}$ est la position de la trace $T_2$ de la mesure à l'instant k,
dans lequel $D_{T1,k}$ est la position de la trace $T_1$ de la mesure à l'instant k,
déterminer une ou plusieurs inconnues à partir du rapport linéaire entre la première trace et la seconde trace.

14. Support lisible par ordinateur sur lequel est stocké un programme pour mettre en oeuvre un procédé de suivi pour regrouper des échos devant être respectivement renvoyés vers des réflecteurs identiques et provenant de courbes d'échos détectées à différents instants, lequel programme, lorsqu'il est exécuté sur un processeur d'un appareil de mesure de niveau de remplissage basée sur le temps de propagation, amène le processeur à exécuter les étapes suivantes consistant à :

déterminer une première trace d'un premier groupe d'échos (701) qui doivent être renvoyés vers un premier réflecteur, et une seconde trace d'un second groupe d'échos (702) qui doivent être renvoyés vers un second réflecteur, dans lequel chaque trace décrit le temps de propagation du signal d'émission correspondant provenant de l'unité d'émission jusqu'au réflecteur affecté à la trace et sur le retour jusqu'à l'unité de réception aux différents instants ($t_1$, $t_2$, $t_3$, $t_4$), **caractérisé par** les étapes consistant à :

déterminer un rapport linéaire entre la première trace et la seconde trace qui peut être décrit mathématiquement comme suit :

$$D_{T2,k} = a_1 \cdot D_{T1,k} + a_0 + e_k$$

dans lequel $D_{T2,k}$ est la position de la trace $T_2$ de la mesure à l'instant k,
dans lequel $D_{T1,k}$ est la position de la trace $T_1$ de la mesure à l'instant k,
déterminer une ou plusieurs inconnues à partir du rapport linéaire entre la première trace et la seconde trace.

15. Elément de programme pour mettre en oeuvre un procédé de suivi pour regrouper des échos devant être respectivement renvoyés vers des réflecteurs identiques et provenant de courbes d'échos détectées à différents instants, lequel élément de programme, lorsqu'il est exécuté sur un processeur d'un appareil de mesure de niveau de remplissage basée sur le temps de propagation, amène le processeur à exécuter les étapes suivantes consistant à :

déterminer une première trace d'un premier groupe d'échos qui doivent être renvoyés vers un premier réflecteur, et une seconde trace d'un second groupe d'échos qui doivent être renvoyés vers un second réflecteur, dans lequel chaque trace décrit le temps de propagation du signal d'émission correspondant provenant de l'unité d'émission jusqu'au réflecteur affecté à la trace et sur le retour jusqu'à l'unité de réception aux différents instants, **caractérisé par** les étapes consistant à :

déterminer un rapport linéaire entre la première trace et la seconde trace qui peut être décrit mathématiquement comme suit :

$$D_{T2,k} = a_1 \cdot D_{T1,k} + a_0 + e_k$$

dans lequel $D_{T2,k}$ est la position de la trace $T_2$ de la mesure à l'instant k,
dans lequel $D_{T1,k}$ est la position de la trace $T_1$ de la mesure à l'instant k,
déterminer une ou plusieurs inconnues à partir du rapport linéaire entre la première trace et la seconde trace.

Fig. 1

Fig. 2

Fig. 3

Alle mögliche funktionale Zusammenhänge:

$T_{71} \longrightarrow T_{72}$ $\quad$ $T_{72} \longrightarrow T_{73}$ $\quad$ $T_{73} \longrightarrow T_{74}$

$T_{71} \longrightarrow T_{73}$ $\quad$ $T_{72} \longrightarrow T_{74}$ $\quad$ $N \cdot (N-1)\,/2 = \dfrac{4 \cdot 3}{2} = 6$

$T_{71} \longrightarrow T_{74}$

Reduktion der Kombinatorik:

$T_{71} \longrightarrow T_{72}$ $\quad$ $N-1 = 3$

$T_{71} \longrightarrow T_{73}$

$T_{71} \longrightarrow T_{74}$

Kein Verlust an Informationsgehalt:

$T_{72} \longrightarrow T_{71} \longrightarrow T_{73} \stackrel{\wedge}{=} T_{72} \longrightarrow T_{73}$

$T_{72} \longrightarrow T_{71} \longrightarrow T_{74} \stackrel{\wedge}{=} T_{72} \longrightarrow T_{74}$

$T_{73} \longrightarrow T_{71} \longrightarrow T_{74} \stackrel{\wedge}{=} T_{73} \longrightarrow T_{74}$

## Fig. 4

502

500

513

507

501

503

510

520

505

509

512

508

504

506

511

# Fig. 5

502   501

500

513

503

601

520

504

602

# Fig. 6

$t = t_1$

706

704

701

703

702

$D_{L, t_1}$

$D_{B, t_1}$

D

A

705

## Fig. 7A

706

704

701

703

702

$t = t_2 > t_1$

$D_{L, t_2}$

$D_{L, t_1}$

$D_{B, t_1}$

$D_{B, t_2}$

D

A

705

## Fig. 7B

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 11167924 A
- US 20060137446 A1
- EP 2309235 A1
- EP 2148219 A1
- WO 2009037000 A2